Europäisches Patentamt

**European Patent Office**

**Office européen des brevets**

(11) Numéro de publication: **0 157 698 B1**

## FASCICULE DE BREVET EUROPEEN

(45) Date de publication de fascicule du brevet:
**08.05.91**

(51) Int. Cl.⁵: **H02K 23/00**, H02P 7/00,
E05F 15/16, H02K 23/30

(21) Numéro de dépôt: **85400576.6**

(22) Date de dépôt: **25.03.85**

(54) **Moteur électrique pour la commande d'éléments de véhicules automobiles dans deux sens opposés, avec effort résistant plus élevé dans un sens que dans l'autre, tels que lève-vitre ou dossiers articulés de siège.**

(30) Priorité: **26.03.84 FR 8404666**

(43) Date de publication de la demande:
**09.10.85 Bulletin 85/41**

(45) Mention de la délivrance du brevet:
**08.05.91 Bulletin 91/19**

(84) Etats contractants désignés:
**DE GB IT SE**

(56) Documents cités:
**DE-C- 452 730**
**FR-A- 662 885**
**FR-A- 2 396 149**
**US-A- 1 910 321**

(73) Titulaire: **ROCKWELL AUTOMOTIVE BODY SYSTEMS-FRANCE EN ABREGE:ROCKWELL ABS-FRANCE**
**Tour Gan Cédex 13**
**F-92082 Paris La Defense 2(FR)**

(72) Inventeur: **Rampignon, Marc**
**20 rue Henri Dunant**
**F-93250 Villemonble(FR)**

(74) Mandataire: **Polus, Camille et al**
**c/o Cabinet Lavoix 2, Place d'Estienne d'Orves**
**F-75441 Paris Cedex 09(FR)**

## Description

La présente invention a pour objet un moteur électrique pour la commande d'éléments de véhicules automobiles, dans deux sens opposés, avec un effort résistant plus élevé dans un sens que dans l'autre, ces éléments pouvant être des lève-vitre, des dossiers articulés de sièges ou des glissières de siège, des fermetures de portes ou de coffres, ou encore des toits ouvrants.

Plus particulièrement, le moteur électrique visé est du type dont la caractéristique mécanique, c'est-à-dire la vitesse de rotation en fonction du couple résistant, est différente d'un sens de rotation à l'autre.

Le moteur du type en cause comporte de façon connue, comme décrit dans le DE-C 452 730, une paire de balais placés entre des pôles inducteurs et susceptibles de coopérer avec un induit constitué d'un collecteur solidaire d'une armature traversée par l'axe du moteur et dans laquelle sont ménagées des encoches dans lesquelles sont bobinés des fils de connexion d'une série de lames dont est formé le collecteur, l'armature de l'induit pouvant tourner autour de son axe entre deux aimants permanents.

Dans l'état de la technique antérieure, le FR-A 2 396 149 (SIEMENS) décrit un moteur électrique d'actionnement d'accessoires d'automobile muni de balais décalés par rapport au plan médian du moteur. Ce décalage permet de disposer de davantage de place pour les balais, et n'entraîne donc pas de décalage électrique visant à favoriser la rotation dans un sens plutôt que dans l'autre.

On sait par ailleurs que dans certains dispositifs de lève-vitre, dépourvus de ressort d'équilibrage, ou lorsque celui-ci est supprimé par économie, le mécanisme du lève-vitre doit vaincre des efforts résistants plus élevés en montée (forces de frottement augmentées du poids de la glace) qu'en descente (forces de frottement déduites du poids de la glace qui devient moteur). D'autre part, la capacité d'amortissement en fin de course de ce mécanisme est supérieure en butée haute. Il est clair qu'un excès de vitesse en descente accroît inutilement la fatigue du mécanisme qui doit être réalisé en conséquence.

De plus, dans le cas où il s'agit de commander un élément constitué par un dossier de siège, il est souhaitable que le couple bloqué, c'est-à-dire le couple exercé par le moteur en butée basse lorsque le dossier a atteint sa position la plus basse, ne soit pas trop élevé, et ce pour préserver la sécurité du passager qui se trouve derrière le dossier ainsi abaissé.

L'invention a pour but de résoudre ces problèmes en utilisant un moteur électrique agencé de façon à ne pas modifier sensiblement la vitesse dans le sens de l'effort résistant le moins élevé (par exemple la descente d'un lève-vitre) tout en ne réduisant pas ou en accroissant sa vitesse dans l'autre sens (celui de la montée d'un lève-vitre par exemple), par rapport aux vitesses correspondantes des moteurs utilisés jusqu'à présent.

Conformément à l'invention, le moteur présente les caractéristiques mentionnées à la revendication 1.

Le décalage angulaire peut varier dans de larges limites, par exemple entre 0° et 65° environ. On constate que dans ces conditions pour un moteur soumis à un couple résistant proche du couple de fonctionnement, on ne modifie pas sensiblement la vitesse dans le sens de l'effort résistant le moins élevé (descente du lève-vitre par exemple), tandis qu'on accroît sa vitesse dans le sens opposé (montée d'un lève-vitre par exemple). Dans ces conditions, on peut utiliser un moteur moins puissant, donc plus économique, pour égaliser les vitesses dans les deux sens de rotation (montée et descente par exemple), avec des couples résistants différents.

L'invention a également pour objet un mécanisme de commande d'un élément de véhicule automobile dans deux sens opposés avec un effort résistant plus élevé dans un sens que dans l'autre tel qu'un lève-vitre, un dossier articulé de siège, une fermeture de porte ou de coffre, un toit ouvrant, caractérisé en ce qu'il est équipé d'un moteur électrique selon la revendication 1.

D'autres particularités et avantages de l'invention apparaîtront au cours de la description qui va suivre, faite en référence aux dessins annexés qui en illustrent plusieurs formes de réalisation à titre d'exemples non limitatifs :

- la Fig. 1 est une vue schématique partielle en élévation en bout d'un moteur électrique classique ;
- la Fig. 2 est une vue analogue à la Fig. 1 illustrant un second moteur électrique connu en soi.
- la Fig. 3 est une vue schématique analogue aux figures 1 et 2 illustrant un premier mode de réalisation du moteur électrique selon l'invention ;
- la Fig. 4A est une vue schématique montrant la manière dont est réalisé le bobinage d'un moteur électrique classique entre les lames du collecteur et les encoches de l'armature de l'induit ;
- la Fig. 4B est une vue analogue à la figure 4A montrant la manière dont est réalisé le bobinage du moteur suivant un second mode de réalisation de l'invention ;
- la Fig. 5 est une vue en perspective éclatée en grandeur nature d'un moteur électrique conforme à l'invention ;

- les Fig. 6 et 7 sont des diagrammes illustrant des exemples de vitesses de rotation du moteur en fonction de son couple résistant, respectivement dans le sens de l'effort résistant le moins élevé de l'élément commandé pour la figure 6 et dans le sens de l'effort résistant le plus élevé de cet élément pour la figure 7.

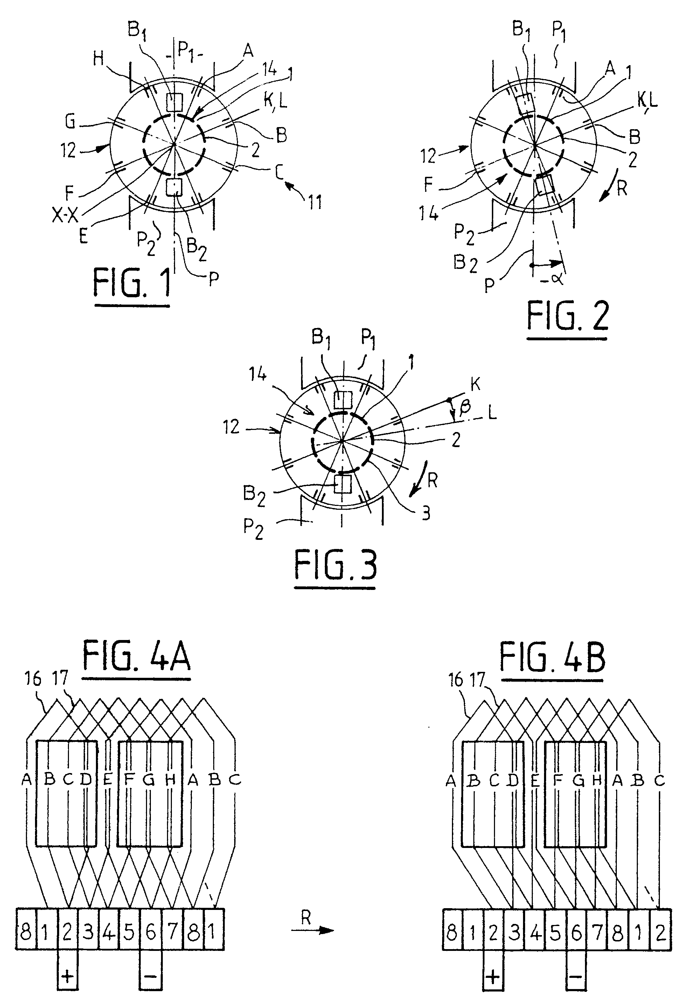

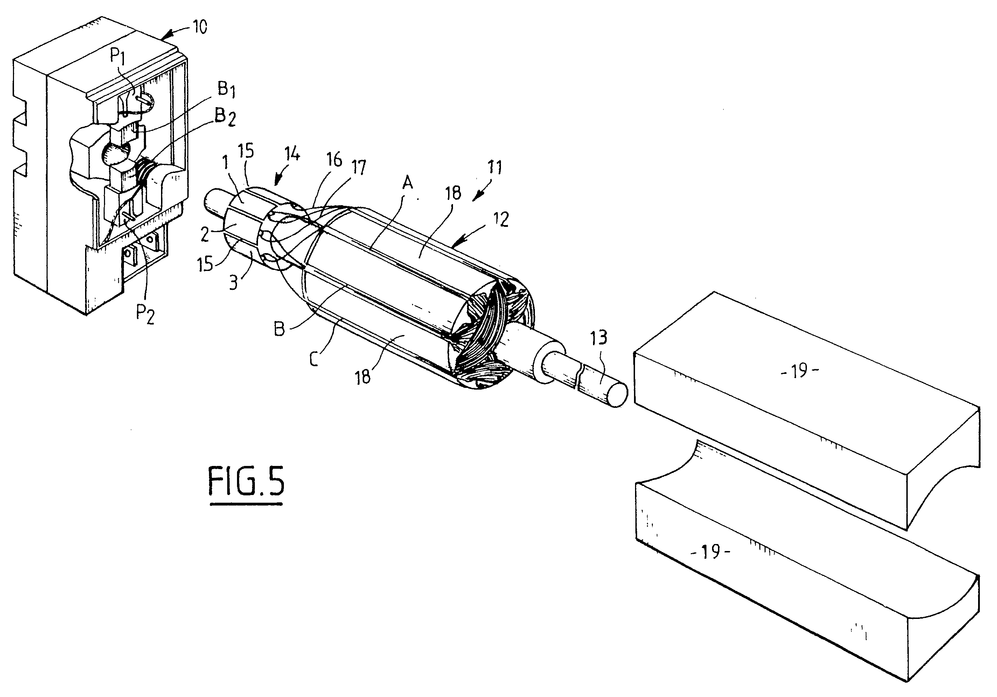

Le moteur électrique représenté aux Figures 1 et 5 comprend, de manière connue en soi , un boîtier 10 contenant deux balais conducteurs B1, B2, montés respectivement dans des pôles inducteurs P1 et P2. Le moteur comprend également un induit 11 constitué d'une armature cylindrique 12 solidaire d'un axe 13, présentant une série d'encoches longitudinales parallèles (A, B, C...H), au nombre de huit dans cet exemple, mais qui peut évidemment varier, et d'un collecteur 14 solidaire en rotation de l'axe 13, ce collecteur pouvant coopérer avec les balais B1, B2. Le collecteur 14 est formé d'une série de lames cylindriques au nombre de huit dans cet exemple, référencées 1, 2, 3...8. Les lames 1, 2,...8 sont séparées par des fentes 15, parallèles entre elles et à l'axe 13 qui traverse l'armature 12. L'induit 11 est complété par des fils tels que 16, 17... constituant un bobinage assurant la connexion électrique entre les lames 1, 2...du collecteur14 en passant dans les encoches (A, B, C...H) autour des éléments 18 de l'armature 12 séparés par ces encoches. Le moteur est complété par deux aimants permanents 19 montés dans un carter non représenté, de part et d'autre de l'induit 11. Les pôles inducteurs P1, P2 déterminent une ligne neutre théorique pratique P pour l'induit 11.

Dans un moteur réalisé de façon connue en soi (Fig. 2), les balais B1, B2, sont décalés d'un angle déterminé (moins $\alpha$ ) par rapport à la ligne neutre théorique pratique P, constituée par une droite perpendiculaire à l'axe 13 et reliant les pôles P1 et P2 comme indiqué ci-dessus. Ce décalage angulaire (- $\alpha$) est réalisé dans le sens opposé au sens de rotation R du moteur pour faire manoeuvrer l'élément commandé par ce dernier dans le sens de l'effort résistant le plus élevé (montée d'un lève-vitre par exemple). Le sens de rotation R indiqué à la Figure 2 est le sens des aiguilles d'une montre. La valeur du décalage (- $\alpha$) peut varier dans de larges limites, par exemple entre 0 et 65° au maximum.

Suivant un premier mode de réalisation possible du moteur visé par l'invention, chaque plan L contenant l'axe géométrique X-X du moteur (coaxial avec l'axe 13) et passant par le milieu d'une lame 1, 2, 3... du collecteur 14, est décalé d'un angle déterminé $\beta$ (Figure 3) par rapport au plan correspondant K passant par deux encoches diamétralement opposées de l'armature 12 (B, F par exemple) et ce dans le sens de rotation R du moteur correspondant à celui de l'effort résistant le plus élevé de l'élément commandé (par exemple celui de la montée d'un lève-vitre).

Une comparaison des Figures 1 et 3 fait clairement apparaître le décalage angulaire $\beta$ . Les balais B1, B2, étant restés dans leur position d'origine de la Figure 1, le décalage $\beta$ correspond à un décalage des lames 1, 2, 3... du collecteur 14 par rapport aux encoches (A, B...) de l'armature 12. En pratique, ce décalage angulaire peut être compris entre 0 et 65° au maximum.

La Figure 4A montre le développement du bobinage d'un moteur électrique classique, tandis que la Figure 4B montre le développement de ce bobinage suivant un troisième mode de réalisation de l'invention.

Dans la réalisation classique du bobinage, les fils de connexion 16, 17... sont bobinés suivant une progression. 1 - AD - 2 - BE - 3 - CF - 4 - DG - 5 - EH - 6 - FA - 7 - GB - 8 - HC - 1, illustrés à la Figure 4A.

Dans la réalisation selon l'invention (Figure 4B), les fils de connexion 16, 17... sont bobinés suivant la progression : 2 - AD - 3 - BE - 4 - CF - 5 - DG - 6 - EH - 7 - FA - 8 - GB - 1 - HC - 2. On réalise ainsi un décalage angulaire d'une lame (1, 2...) par rapport à la ligne P des pôles inducteurs P1, P2, dans la mise du bobinage au collecteur 14, et ce dans le sens de rotation R du moteur.

Le bobinage illustré à la Figure 4B peut être réalisé sans déplacer angulairement le collecteur 14 ou bien être combiné à cette disposition, illustrée à la Figure 3. Pratiquement, le résultat obtenu est le même que l'on décale le collecteur 14 angulairement par rapport à la ligne neutre P, ou qu'on décale angulairement la mise au collecteur 14 des fils de connexion 16, 17..

Les exemples de réalisation décrits ci-dessus se rapportent à un induit 12 à huit encoches et à huit lames de collecteur, mais peuvent évidemment être extrapolés à des induits à n encoches et N lames de collecteur.

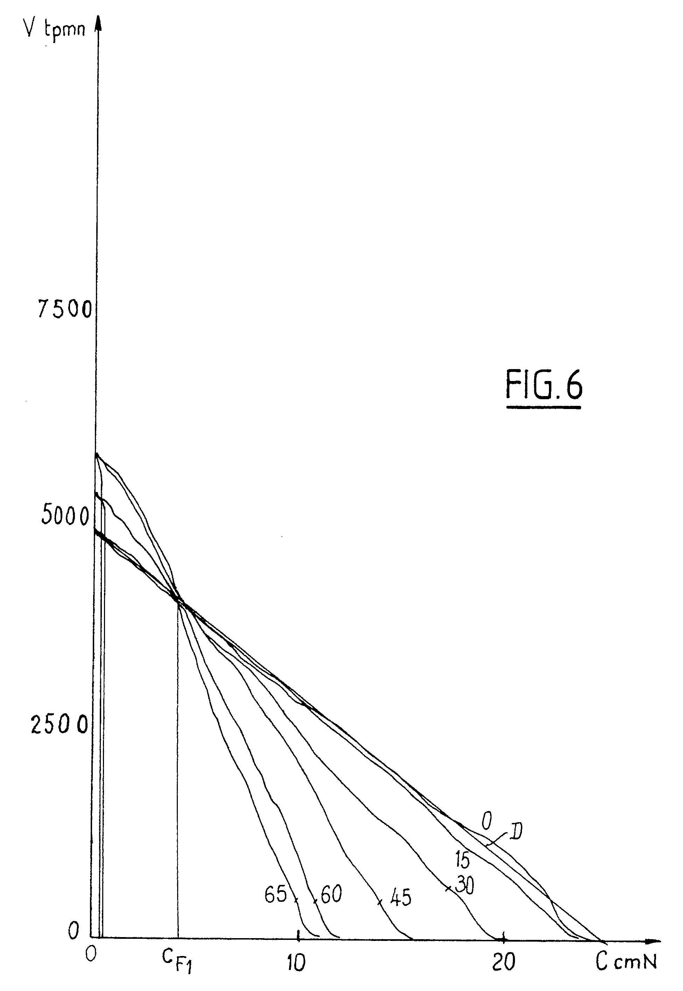

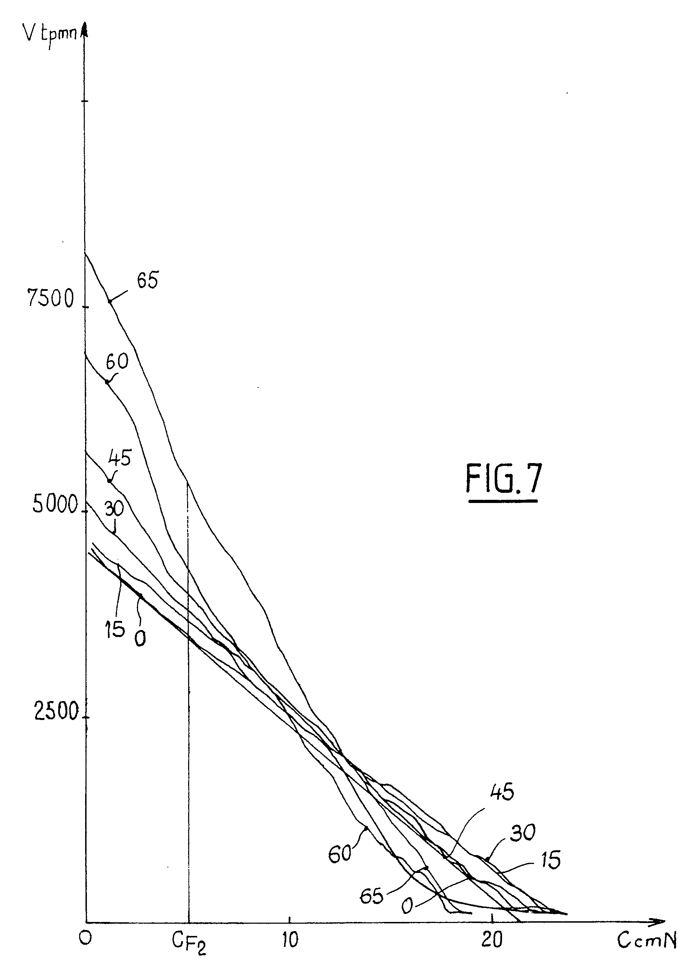

On a représenté aux Figures 6 et 7 des diagrammes illustrant les caractéristiques d'un moteur électrique conforme à l'invention, montrant la variation de sa vitesse de rotation V en tours/minute en fonction de son couple résistant C (en cmN).

La Figure 6 montre la variation de la vitesse du moteur en fonction du couple résistant dans le sens de l'effort résistant le moins élevé de l'élément commandé (lève-vitre ou dossier de siège par exemple), et ce pour des décalages angulaires - $\alpha$ ou $\beta$ compris entre 0 et 65°, les valeurs 0, 15, 30, 45, 60, 65° étant respectivement portées sur les courbes. On voit que par rapport à une droite de référence D, correspondant sensiblement à un décalage angulaire égal à 0, le couple bloqué diminue au fur et à mesure que le décalage angulaire augmente. D'autre part, pour un même couple résistant correspondant à un moteur d'une puissance donnée et pratiquement faible dans ce sens de rotation, on voit que la vitesse de descente varie peu pour un décalage angulaire - α ou β compris entre 0 et 65°. La valeur du couple $C_{F1}$ est proche de celle du couple de fonctionnement dans le sens du couple résistant le moins élevé.

Le diagramme de la Figure 7 montre une droite de référence référencée 00, correspondant à la caractéristique mécanique d'un moteur dont le décalage angulaire - α ou β est nul, ainsi que les courbes de la vitesse de rotation en fonction du couple résistant pour des décalages angulaires de 15°, 30°, 45°, 60° et 65°.

On voit qu'à couple résistant égal, un accroissement du décalage angulaire - α et/ou β accroît la vitesse du moteur (sauf pour les couples élevés proches du couple bloqué qui sont loin des couples de fonctionnement pratiques).

On peut donc utiliser un moteur moins puissant, donc plus économique, pour égaliser les vitesses V dans les deux sens de rotation (montée et descente pour un lève-vitre par exemple) avec des couples différents pour un même moteur. La valeur du couple $C_{F2}$ est proche de celle du couple de fonctionnement dans le sens de l'effort résistant le plus élevé.

Dans l'application du moteur selon l'invention, à la commande d'un dossier articulé de siège de véhicule, les impératifs suivants sont satisfaits : dans le sens de la montée du dossier, il faut un couple important pour relever le dossier, tandis que dans le sens de la descente, il est souhaitable d'obtenir un couple bloqué faible pour préserver la sécurité des passagers arrière. On constate précisément sur la Figure 6 que plus on augmente le décalage angulaire, plus on diminue le couple bloqué. On diminue également en même temps il est vrai la vitesse pour un couple résistant donné moyen ou élevé, mais cela n'est pas gênant dans le sens de la descente puisque le couple résistant est faible dans ce sens. Dans le sens de la montée (Figure 7) pour un couple résistant donné, et pour un moteur donné, la vitesse augmente ou bien à vitesse constante de montée, on peut se contenter d'un moteur moins puissant, donc moins onéreux que les moteurs habituellement utilisés : ce moteur aura à la descente un couple bloqué moins élevé.

D'une manière plus générale, l'avantage principal de l'invention consiste dans le fait que, en partant d'un moteur ayant un couple donné, on réduit le couple bloqué à la descente ou dans le sens de l'effort résistant le moins élevé, tout en ne réduisant pas ou en améliorant la vitesse dans l'autre sens.

La réduction du couple moteur bloqué (développé à vitesse nulle en butée basse comme expliqué précédemment) présente encore un autre avantage dans le cas d'un lève-glace : en effet, ce dernier peut être ou bien allégé puisqu'il peut être moins résistant mécaniquement, ou bien voir sa durée de vie augmentée si on lui conserve sa résistance mécanique, et ce compte tenu que la capacité d'amortissement au choc en butée de ces mécanismes est généralement plus faible en butée basse qu'en butée haute.

L'invention est avantageusement applicable à tout mécanisme électrique de commande d'un élément dans un sens de déplacement à effort résistant élevé et dans un autre sens à effort résistant faible, mettant en oeuvre un moteur à collecteur dans les deux sens de rotation, mais avec des couples résistants différents. Dans le domaine automobile, l'invention est ainsi applicable à des mécanismes de commande de lève-glaces, de toits ouvrants, de dossiers articulés de sièges, de fermetures électriques de portes ou de coffres, etc.

## Revendications

1. Moteur électrique pour la commande d'éléments de véhicules automobiles dans deux sens opposés, avec un effort résistant plus élevé dans un sens que dans l'autre tels que lève-vitre, dossiers articulés de sièges, fermeture de portes ou de coffres, toits ouvrants, du type dont la vitesse de rotation en fonction du couple résistant est différente d'un sens de rotation à l'autre, comportant une paire de balais (B1, B2) placés entre des pôles inducteurs (P1, P2) et susceptibles de coopérer avec un induit (11) constitué d'un collecteur (14) solidaire d'une armature (12) traversée par l'axe (13) du moteur et dans laquelle sont ménagées des encoches (A, B...H) dans lesquelles sont bobinés des fils (16, 17...) de connexion d'une série de lames (1, 2...8) dont est formé le collecteur (14), caractérisé en ce que les fils de connexion du bobinage reliant les lames (1, 2...) et passant par les encoches (A, B...) sont bobinés suivant la progression 2 - AD - 3 - BE - 4 - CF - 5 - DG - 6 - EH - 7 - FA - 8 - GB - 1 - HC - 2... de façon à réaliser un décalage angulaire d'une lame (1, 2...) par rapport à la ligne (P) des pôles inducteurs (P1, P2) dans la mise du bobinage au collecteur (14) et ce dans le sens de rotation (R) du moteur utilisé pour la montée de l'élément à commander.

2. Moteur selon la revendication 2, caractérisé en ce que l'angle précité ( β ) est compris entre 0 et 65°.

3. Mécanisme de commande d'un élément de véhicule automobile dans deux sens opposés avec un effort résistant plus élevé dans un sens que dans l'autre tel qu'un lève-vitre, un dossier articulé de siège, une fermeture de porte ou de coffre, un toit ouvrant, caractérisé en ce qu'il est équipé d'un moteur électrique selon la revendication 1 ou 2.

## Claims

1. Electric motor for controlling parts of automotive vehicles in two opposite directions with a higher resisting force in one direction than in the other, such as window raisers, adjustable seat backs, closing apparatus for doors or boots, sunroofs of the type of which the rotational velocity as a function of the resistant torque differs from one direction of rotation to the other, comprising one pair of brushes (B1, B2) located between two poles (P1, P2) and capable of cooperating with a rotor (11) consisting of a commutator (14) integral with an armature (12) through which passes the shaft (13) of the motor and in which there are provided notches (A, B, .... H) in which there are wound connection wires (16, 17 .... ) for a series of blades (1, 2, .... 8 ) of which the commutator (14) is formed, characterised in that the connection wires of the winding, which connect the blades (1, 2, .... ) and pass through the notches (A, B, .... ), are wound in the sequence 2 - AD - 3 - BE - 4 - CF - 5 - DG - 6 - EH - 7 - FA - 8 - GB - 1 - HC - 2 ... in order to offset a blade (1, 2, .... ) at an angle to the line (P) of the poles (P1, P2) in the fitting of the winding to the commutator (14) this being in the rotational direction (R) of the motor that is used for mounting the components to be driven.

2. Motor according to claim 1, characterised in that the above-mentionned angle ($\beta$) is between 0 and 65°.

3. Electric motor for controlling parts of automotive vehicles in two opposite directions with a higher resisting force in one direction than in the other, such as a window raiser, adjustable seat back, closing apparatus for doors or boots, a sunroof, characterised in that it is equipped with an electric motor according to claim 1 or 2.

## Ansprüche

1. Elektromotor für den Antrieb von Kraftfahrzeugelementen, wie Fensterkurbeln, verschwenkbare Sitzrückenlehnen, Tür- oder Kofferraumverschlüsse und Schiebedächer, in zwei einander entgegengesetzten Richtungen mit höherem Widerstand in einer Richtung als in der anderen, dessen Drehgeschwindigkeit in Abhängigkeit von dem Widerstandsmoment in den beiden Drehrichtungen verschieden ist und der ein Paar von Bürsten (B1, B2) besitzt, die zwischen Induktionspolen (P1, P2) angeordnet sind und mit einem Läufer (11) zusammenwirken können, der aus einem Kollektor (14) besteht, der mit einem Anker (12) fest verbunden ist, den die Achse (13) des Motors durchquert und in dem Nuten (A, B...H) vorgesehen sind, in denen Drähte (16, 17 ...) zur Verbindung einer Reihe von den Kollektor (14) bildenden Lamellen (1, 2...8) aufgewickelt sind, dadurch gekennzeichnet, daß die Verbindungsdrähte der Wicklung, die die Lamellen (1, 2...) verbinden und durch die Nuten (A, B...) laufen, in der Folge 2 - AD - 3 - BE - 4 - CF - 5 - DG - 6 - EH - 7 - FA - 8 - GB - 1 - HC - 2... gewickelt sind, so daß in dem Anschluß der Wicklung an den Kollektor (14) eine winkelmäßige Versetzung einer Lamelle (1, 2...) bezüglich der Linie (P) der Induktionspole (P1, P2) hergestellt ist, und zwar in der Drehrichtung (R) des Motors, die zum Heben des anzutreibenden Elements benutzt wird.

2. Motor nach Anspruch 2, dadurch gekennzeichnet, daß dieser Winkel ($\beta$) zwischen 0 und 65° liegt.

3. Mechanismus zum Antrieb eines Kraftfahrzeugelements, beispielsweise einer Fensterkurbel, einer verschwenkbaren Sitzrückenlehne, eines Tür- oder Kofferraumverschlusses oder eines Schiebedachs, in zwei entgegengesetzten Richtungen mit höherem Widerstand in einer Richtung als in der anderen, dadurch gekennzeichnet, daß er mit einem Elektromotor nach Anspruch 1 oder 2 ausgerüstet ist.

FIG. 1

FIG. 2

FIG. 3

FIG. 4A

FIG. 4B

FIG.5

EP 0 157 698 B1

FIG.6

FIG.7